# EUROPÄISCHE PATENTANMELDUNG

(11) **EP 3 943 744 A2**
(43) Veröffentlichungstag der Anmeldung: **26.01.2022**
(21) Anmeldenummer: 21182261.4
(22) Anmeldetag: 29.06.2021
(51) Int. Cl.: F02N 11/08, F02N 15/06

(54) **ANORDNUNG MIT EINEM SCHALTER UND EINEM ELEKTROMOTOR, SOWIE EIN SCHALTER UND EINE BRENNKRAFTMASCHINE**

(30) Priorität: 30.06.2020 DE 102020117203
(71) Anmelder: SEG Automotive Germany GmbH, 70499 Stuttgart (DE)
(72) Erfinder: LI, Jianhua, Changsha, Hunan, 410129 (CN)
(74) Vertreter: DehnsGermany Partnerschaft von Patentanwälten

(57) **Zusammenfassung**

Die Erfindung betrifft eine Anordnung (21) mit einem Schalter und einem Elektromotor (230), insbesondere Startermotor einer Brennkraftmaschine, wobei der Elektromotor (230) einen Läufer (232), einen Ständer (231), einen Energieversorgungsanschluss (45) und einen Masseanschluss (270) aufweist, wobei ein Schaltelement (224) des Schalters zwischen einer ersten Stellung und einer zweiten Stellung umschaltbar ist, wobei das Schaltelement (224) in der ersten Stellung einen Energieversorgungsanschluss (50) der Anordnung (21) und den Energieversorgungsanschluss (45) des Elektromotors (230) elektrisch verbindet, wobei das Schaltelement (224) in der zweiten Stellung den Energieversorgungsanschluss (45) des Elektromotors (230) mit dem Masseanschluss (270) des Elektromotors (230) elektrisch verbindet, sowie einen Schalter und eine Brennkraftmaschine.

## Beschreibung

Die vorliegende Erfindung betrifft eine Anordnung mit einem Schalter und einem Elektromotor, sowie einen Schalter und eine Brennkraftmaschine.

### Stand der Technik

Zum Starten von Brennkraftmaschinen können sog. Starter eingesetzt werden, die üblicherweise mit einem Relais bzw. elektromagnetischen Schalter ausgerüstet sind, um einen Elektromotor zum Andrehen des Verbrennungsmotors zu bestromen. Der Elektromotor bzw. Startermotor wird zum Andrehen mittels des Schalters mit der Fahrzeugbatterie (Starterbatterie) verbunden. Wenn die Brennkraftmaschine gestartet ist, öffnet der Schalter wieder und der Startermotor läuft aus, was zu störenden Geräuschen führen kann.

### Offenbarung der Erfindung

Erfindungsgemäß werden eine Anordnung mit einem Schalter und einem Elektromotor, sowie ein Schalter und eine Brennkraftmaschine mit den Merkmalen der unabhängigen Patentansprüche vorgeschlagen. Vorteilhafte Ausgestaltungen sind Gegenstand der Unteransprüche sowie der nachfolgenden Beschreibung.

Die erfindungsgemäße Anordnung weist einen Schalter und einen Elektromotor, insbesondere Startermotor einer Brennkraftmaschine, auf. Der Elektromotor weist einen Läufer, auch Rotor genannt, einen Ständer, einen Energieversorgungsanschluss und einen Masseanschluss auf. Ein Schaltelement des Schalters ist zwischen einer ersten Stellung und einer zweiten Stellung umschaltbar. In der ersten Stellung verbindet das Schaltelement einen Energieversorgungsanschluss der Anordnung elektrisch mit dem Energieversorgungsanschluss des Elektromotors. Auf diese Weise wird der Elektromotor bestromt und dreht sich. In der zweiten Stellung verbindet das Schaltelement den Energieversorgungsanschluss des Elektromotors elektrisch mit dem Masseanschluss des Elektromotors. Im Unterschied zu einem herkömmlichen Starterrelais wird somit durch das Schalten des Schaltelements in die zweite Stellung nicht nur der Energieversorgungsanschluss des Elektromotors wieder vom Energieversorgungsanschluss der Anordnung getrennt, sondern darüber hinaus noch elektrisch mit dem Masseanschluss des Elektromotors verbunden, d.h. der Elektromotor wird über das Schaltelement kurzgeschlossen. Dadurch kann die Auslaufphase signifikant verkürzt werden.

Vorteilhafterweise verbindet das Schaltelement in der zweiten Stellung den Energieversorgungsanschluss des Elektromotors mit dem Masseanschluss des Elektromotors über ein Widerstandsbauteil elektrisch. Je größer dabei der Widerstand des Widerstandsbauteils ist, desto schneller verringert sich der fließende Strom durch den Elektromotor. Durch das zusätzliche Widerstandsbauteil kann somit der Elektromotor schneller entladen werden und somit das Auslaufen des Elektromotors schneller bzw. in kürzerer Zeit realisiert werden. Somit wird die Zeit, während der die unerwünschten Geräusche auftreten, zusätzlich reduziert.

Vorteilhafterweise weist der Läufer des Elektromotors eine Feldwicklung zum Erzeugen eines Läufermagnetfelds auf, wobei der Energieversorgungsanschluss des Elektromotors und der Masseanschluss des Elektromotors mit der Feldwicklung des Elektromotors verbunden sind. Die Feldwicklung (Spule) wird somit bei Ausschalten des Elektromotors, wobei der Schalter in die zweite Stellung versetzt wird, nicht mehr weiter bestromt. Durch die Selbstinduktion in der Feldwicklung wird einer Entladung der Feldwicklung entgegengewirkt, wodurch sich der Elektromotor weiter dreht. Durch Kurzschließen der Feldwicklung über den Masseanschluss können die Entladung der Feldwicklung und somit das Auslaufen des Elektromotors beschleunigt werden.

Vorteilhafterweise weist der Schalter einen Magnetaktor auf. Der Magnetaktor weist eine Spule, einen von dieser bewegbaren Anker und eine von dem Anker bewegbare Kontaktbrücke als das Schaltelement auf. Die Kontaktbrücke ist somit durch die Bewegung des Ankers zwischen der ersten Stellung und der zweiten Stellung umschaltbar.

Vorteilhafterweise weist der Schalter einen ersten externen Kontakt und einen zweiten externen Kontakt auf. In der ersten Stellung wird der erste externe Kontakt mit dem zweiten externen Kontakt und in der zweiten Stellung der erste externe Kontakt mit einem Gehäuse des Schalters elektrisch verbunden.. Dies hat den Vorteil, dass existierende Schalter leicht zu erfindungsgemäßen Schaltern umgebaut werden können.

Der zweite externe Kontakt dient insbesondere zur Verbindung der Anordnung mit der Energieversorgung, und der erste externe Kontakt zur Verbindung des des Elektromotors mit dem Schalter. Ist der Schalter in der ersten Stellung, wird somit der Elektromotor bestromt. Ist der Schalter in der zweiten Stellung, wird der Elektromotor mit dem Gehäuse des Schalters verbunden, was dazu führt, dass der Elektromotor kurzgeschlossen wird. Das Gehäuse dient hier als Masseanschluss.

Vorteilhafterweise weist der Schalter einen ersten internen Kontakt und einen zweiten internen Kontakt auf, die von der Kontaktbrücke elektrisch verbindbar sind, wobei der erste interne Kontakt mit dem ersten externen Kontakt und der zweite interne Kontakt mit dem zweiten externen Kontakt elektrisch verbunden ist. Dies ist von Vorteil, da somit eine einfache elektrische Verbindung zwischen dem ersten externen und zweiten externen Kontakt hergestellt werden kann, beispielsweise als Bolzen im Schaltergehäuse.

Ist somit der Schalter in der ersten Stellung, ist der erste interne Kontakt über die Kontaktbrücke mit dem zweiten internen Kontakt elektrisch verbunden, so dass der Energieversorgungsanschluss des Elektromotors mit der Energieversorgung elektrisch verbunden ist und der Elektromotor bestromt wird.

Vorteilhafterweise weist der Schalter einen dritten internen Kontakt und einen vierten internen Kontakt auf. Der dritte interne Kontakt ist von der Kontaktbrücke mit dem vierten internen Kontakt elektrisch verbindbar. Der dritte interne Kontakt ist mit dem ersten internen Kontakt und der vierte interne Kontakt mit dem Masseanschluss des Elektromotors elektrisch verbunden. Dies ist von Vorteil, da somit eine einfache elektrische Verbindung zwischen dem ersten externen Kontakt und dem Masseanschluss hergestellt werden kann.

Ist der Schalter somit in der zweiten Stellung, ist der dritte interne Kontakt über die Kontaktbrücke mit dem vierten internen Kontakt elektrisch verbunden. Dementsprechend ist auch der erste interne Kontakt bzw. der erste externe Kontakt mit dem vierten internen Kontakt elektrisch verbunden. Somit wird der Energieversorgungsanschluss des Elektromotors bzw. der Elektromotor über den Masseanschluss kurzgeschlossen.

Ferner betrifft die Erfindung einen Schalter, insbesondere einen Magnetschalter, der in der oben beschriebenen Anordnung verwendet werden kann, sowie eine Brennkraftmaschine, die die oben beschriebene Anordnung aufweist. In der erfindungsgemäßen Brennkraftmaschine kann im Vergleich zum Stand der Technik das Auslaufen des Elektromotors verkürzt und somit das Auftreten von unerwünschten Geräuschen, die beim Schleifen der Kohlebürsten auf der Kommutatoroberfläche entstehen, reduziert werden.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch einen Ausschnitt eines Bordnetzes mit einer Anordnung mit einem Schalter und einem Elektromotor.
- Figur 2: zeigt schematisch einen Ausschnitt eines Bordnetzes mit einer erfindungsgemäßen Anordnung mit einem erfindungsgemäßen Schalter und einem Elektromotor.
- Figur 3: zeigt schematisch einen Ausschnitt eines erfindungsgemäßen Magnetschalters.

### Ausführungsform(en) der Erfindung

Identische Bezugszeichen in den Figuren bezeichnen gleiche oder baugleiche Elemente und werden nicht jedes Mal gesondert erläutert.

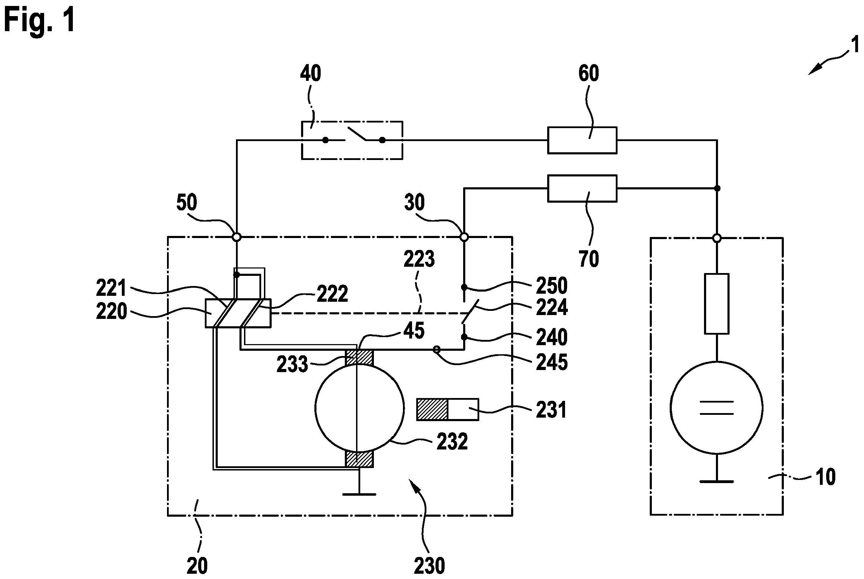

In Figur 1 ist schematisch ein Ausschnitt eines Bordnetzes für eine Brennkraftmaschine gezeigt und insgesamt mit 1 gekennzeichnet. Dieses Bordnetz 1 weist eine Stromquelle, beispielsweise eine Batterie 10, eine nicht erfindungsgemäße Anordnung 20 mit einem Magnetschalter (220-224, 240, 245, 250) und einem Elektromotor 230, insbesondere einem Startermotor, und einen Startschalter 40 auf.

Der Startschalter 40 ist mit der Batterie 10 sowie mit einem ersten Kontakt 50 (sog. Klemme 50) der Anordnung 20 verbunden. Zwischen der Batterie 10 und dem Startschalter 40 ist ein Zuleitungswiderstand mit 60 dargestellt. Die Batterie 10 ist ferner mit einem zweiten Kontakt 30 (sog. Klemme 30) der Anordnung 20 verbunden. Zwischen der Batterie 10 und dem zweiten Kontakt 30 ist ferner ein Zuleitungswiderstand mit 70 dargestellt.

Der Magnetschalter weist einen Magnetaktor 220 mit einer Haltewicklung 221, einer Einzugswicklung 222, einem Anker 223 und einer Kontaktbrücke 224 auf. Wird der Startschalter 40 betätigt und der Stromkreis zwischen der Batterie 10 und dem ersten Kontakt 50 der Anordnung 20 geschlossen, werden der Magnetaktor 220 und der Elektromotor 230 über die Einzugswicklung 222 und die Haltewicklung 221 bestromt.

Die Haltewicklung 221 und die Einzugswicklung 222 erzeugen bei Bestromung des Magnetaktors 220 ein Magnetfeld, das den Anker 223 in Richtung zu dem Magnetaktor 220 zieht, so dass der Anker 223 in eine eingerückte Stellung bewegt wird. Durch die Bewegung des Ankers 223 wird gleichzeitig die Kontaktbrücke 224 derart bewegt, dass sie eine elektrische Verbindung zwischen einem ersten internen Kontakt 240 und einem zweiten internen Kontakt 250 innerhalb des Magnetschalters schließt. Der erste interne Kontakt 240 ist mit einem ersten externen Kontakt 245 elektrisch leitend verbunden, der zweite interne Kontakt 250 mit einem zweiten externen Kontakt, der hier zugleich der zweite Kontakt 30 der Anordnung 20 ist.

Der Elektromotor 230 umfasst einen Energieversorgungsanschluss 45 (sog. Klemme 45), der - beispielsweise über eine Litze oder Stromschiene - mit dem ersten externen Kontakt 245 des Magnetschalters verbunden ist. Wird somit der erste interne Kontakt 240 mit dem zweiten internen Kontakt 250 über die Kontaktbrücke 224 verbunden, wird der Elektromotor 230 bestromt und somit gestartet.

Der Elektromotor 230 umfasst ferner einen Ständer 231, der beispielsweise eine Vielzahl Permanentmagnete aufweist, und einen Läufer 232, der beispielsweise eine Feldwicklung (beispielsweise umfassend eine Vielzahl von Wicklungen) aufweist. Diese Feldwicklung wird über Kohlebürsten 233, die mit dem Energieversorgungsanschluss 45 des Elektromotors 230 verbunden sind, bestromt. Wird der Elektromotor 230 bestromt, fließt Strom über die Kohlebürsten 233 durch die Feldwicklung des Läufers 232 und der Läufer 232 wird in Rotation versetzt. Die Rotation kann auf eine Brennkraftmaschine übertragen werden.

Wird der Strom zum Magnetaktor 220 durch Öffnen des Startschalters 40 unterbrochen, wird der Magnetaktor 220 nicht mehr bestromt und der Anker 223 sowie die Kontaktbrücke 224 werden in die erste Stellung zurückgeschoben. Der Elektromotor 230 wird dadurch nicht weiter bestromt und läuft aus.

Jedoch wird dabei die Rotation des Elektromotors 230 nicht unverzüglich gestoppt, sondern durch einen Freilaufstrom durch den Elektromotor 230, die Einzugswicklung 222 und die Haltewicklung 221 allmählich abgebaut. Dies führt dazu, das unerwünschte Geräusche, die durch Schleifen der Kohlebürsten 233 auf der Kommutatoroberfläche entstehen, während des Auslaufens des Elektromotors 230 auftreten.

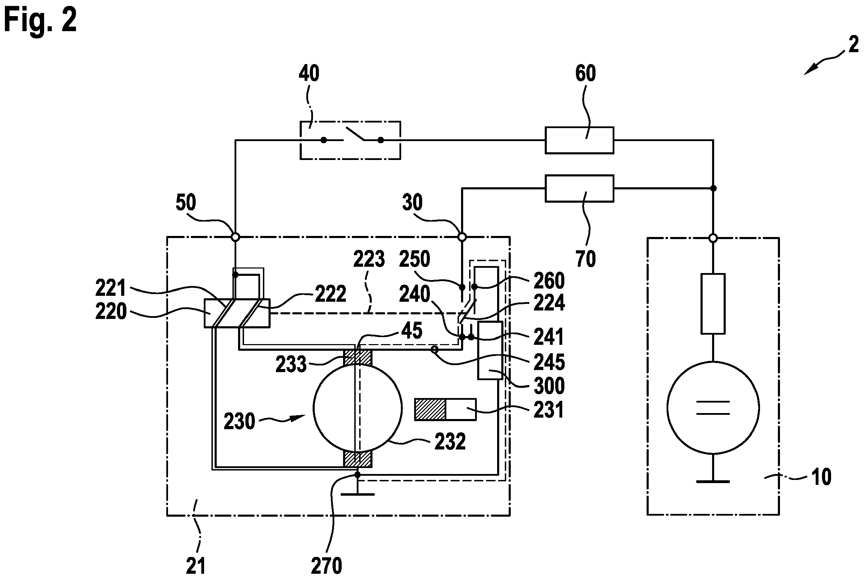

In Figur 2 ist schematisch ein Ausschnitt eines Bordnetzes gezeigt und insgesamt mit 2 gekennzeichnet. Das Bordnetz 2 weist eine bevorzugte Ausführungsform einer erfindungsgemäßen Anordnung 21 auf, die sich von der Anordnung 20 aus Figur 1 durch eine veränderte Verschaltung und einen veränderten Magnetschalter (220-224, 240, 250, 260) unterscheidet.

Der Magnetschalter der Anordnung 21 weist neben dem ersten internen Kontakt 240 und dem zweiten internen Kontakt 250 ferner einen dritten internen Kontakt 241 und einen vierten internen Kontakt 260 auf. Der dritte interne Kontakt 241 ist mit dem ersten internen Kontakt 240 bzw. mit dem ersten externen Kontakt 245 des Magnetschalters verbunden.

Der vierte interne Kontakt 260 ist mit einem Masseanschluss 270 des Elektromotors 230 verbunden. Zwischen dem vierten internen Kontakt 260 und dem Masseanschluss 270 ist ferner ein weiteres Widerstandsbauteil 300 zwischengeschaltet.

Der Magnetschalter weist eine erste Stellung und eine zweite Stellung auf, wobei in der ersten Stellung analog zum Magnetschalter aus Figur 1 der Magnetaktor 220 und die Kontaktbrücke 224 derart positioniert sind, dass die elektrische Verbindung zwischen dem ersten internen Kontakt 240 und dem zweiten internen Kontakt 250 geschlossen ist. Dies führt dazu, dass der Elektromotor 230 über den ersten externen Kontakt 245 sowie den Energieversorgungsanschluss 45 bestromt wird und sich dreht.

Wird der Strom zum Magnetaktor 230 durch Öffnen des Startschalters 40 unterbrochen, wird der Magnetaktor 230 nicht mehr bestromt und der Anker 223 sowie die Kontaktbrücke 224 werden in eine zweite Stellung verschoben, d.h. der Magnetschalter ist somit in der zweiten Stellung. Der Elektromotor 230 wird dadurch nicht weiter bestromt.

Jedoch wird dabei auch hier die Rotation des Elektromotors 230 nicht unverzüglich gestoppt, da die Feldwicklung durch einen Freilaufstrom durch die Einzugswicklung 222 und die Haltewicklung 221 entladen wird. Da die Kontaktbrücke 224 jedoch die elektrische Verbindung zwischen dem dritten internen Kontakt 241 und dem vierten internen Kontakt 260 schließt, der mit dem Masseanschluss 270 des Elektromotors 230 verbunden ist, wird der Elektromotor 230 über das Widerstandsbauteil 300 und den Masseanschluss 270 kurzgeschlossen. Dies führt dazu, dass die Feldwicklung des Elektromotors 230 zusätzlich über das Widerstandsbauteil 300 entladen wird. Insgesamt geschieht die Entladung somit im Vergleich zum Stand der Technik schneller, wodurch der Elektromotor 230 weniger Zeit benötigt, um vollständig auszulaufen bzw. zum Stillstand zu kommen. Insbesondere wird, je größer der ohmsche Widerstand des Widerstandsbauteils 300 ist, die Zeit, die der Elektromotor 230 benötigt, um vollständig auszulaufen, reduziert. Der Elektromotor 230 kommt somit schneller zum Stillstand, wobei dies dazu führt, dass die durch das Schleifen der Kohlebürsten 233 auf der Kommutatoroberfläche entstehenden unerwünschten Geräusche reduziert werden bzw. die Zeit, während der diese unerwünschten Geräusche auftreten, reduziert wird.

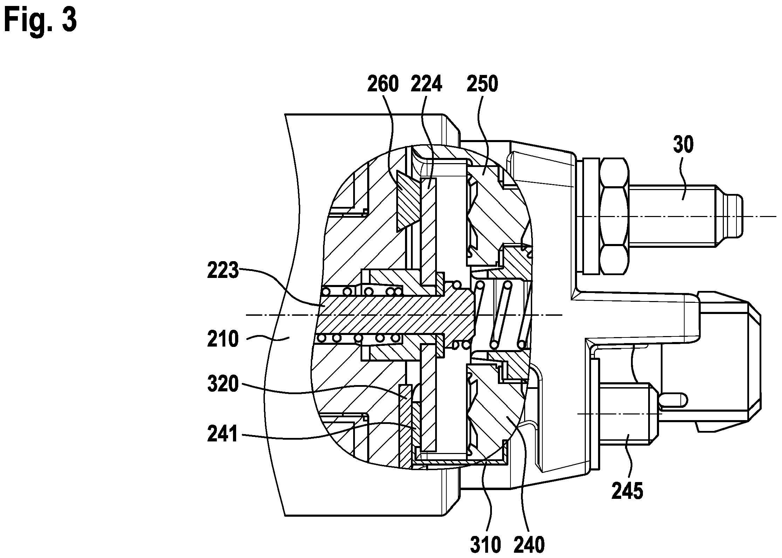

In Figur 3 ist ein Ausschnitt eines Magnetschalters gemäß einer bevorzugten Ausführungsform der Erfindung gezeigt. Der Magnetschalter weist ein Gehäuse 210, den Anker 223 sowie die Kontaktbrücke 224 auf. Der Magnetaktor 220, die Haltewicklung 221 und die Einzugswicklung 222 sind in Figur 3 nicht sichtbar. Der Magnetschalter umfasst den ersten internen Kontakt 240, der mit dem ersten externen Kontakt 245 des Magnetschalters und darüber mit dem Energieversorgungsanschluss 45 des Elektromotors 230 verbunden ist, und den zweiten internen Kontakt 250, der mit dem zweiten externen Kontakt des Magnetschalters, der gleichzeitig den Energieversorgungsanschluss 30 der Anordnung 21 bildet, verbunden ist.

Ferner umfasst der Magnetschalter den dritten internen Kontakt 241, der über eine elektrische Verbindung 310 mit dem ersten internen Kontakt 240 verbunden ist, und den vierten internen Kontakt 260, der mit dem Magnetkern und dadurch mit dem Gehäuse 210 des Magnetschalters verbunden ist. Der dritte interne Kontakt 241 ist derart an dem Magnetkern des Elektromotors 230 angeordnet, dass er mittels eines Isolationselementes 320 elektrisch gegen den Magnetkern bzw. das Gehäuse 210 isoliert ist.

Wenn sich der Magnetschalter in der ersten Stellung befindet, d.h. der erste interne Kontakt 240 und der zweite interne Kontakt 250 sind elektrisch über die Kontaktbrücke 224 verbunden, sind somit der erste externe Kontakt 245 und der zweite externe Kontakt 30 verbunden. Dadurch wird der Elektromotor 230 über den Energieversorgungsanschluss 45 bestromt und somit in Rotation versetzt. Ferner wird, dadurch dass der dritte interne Kontakt 241 mittels des Isolationselementes 320 gegen das Gehäuse 210 isoliert ist, der Elektromotor 230 nicht in der ersten Stellung kurzgeschlossen.

Wenn die Kontaktbrücke 224 durch den Anker 223 in die in Figur 3 gezeigte zweite Stellung bewegt wird, wird zunächst die Bestromung des Elektromotors 230 unterbrochen. Ferner wird der dritte interne Kontakt 241 mit dem vierten internen Kontakt 260 über die Kontaktbrücke 224 elektrisch verbunden. Dadurch wird der erste externe Kontakt 245 über den ersten internen Kontakt 240, den dritten internen Kontakt241 und den vierten internen Kontakt 260 mit dem Magnetkern und dadurch mit dem Gehäuse 210 elektrisch verbunden.

Dies führt dazu, dass der Elektromotor 230 mit dem Masseanschluss 270 (nicht gezeigt) des Elektromotors 230 elektrisch verbunden und somit kurzgeschlossen wird und dadurch ausläuft.

## Patentansprüche

1. Anordnung (21) mit einem Schalter und einem Elektromotor (230), insbesondere Startermotor einer Brennkraftmaschine, wobei der Elektromotor (230) einen Läufer (232), einen Ständer (231), einen Energieversorgungsanschluss (45) und einen Masseanschluss (270) aufweist,
wobei ein Schaltelement (224) des Schalters zwischen einer ersten Stellung und einer zweiten Stellung umschaltbar ist,
wobei das Schaltelement (224) in der ersten Stellung einen Energieversorgungsanschluss (50) der Anordnung (21) und den Energieversorgungsanschluss (45) des Elektromotors (230) elektrisch verbindet,
wobei das Schaltelement (224) in der zweiten Stellung den Energieversorgungsanschluss (45) des Elektromotors (230) mit dem Masseanschluss (270) des Elektromotors (230) elektrisch verbindet.

2. Anordnung (21) nach Anspruch 1, wobei das Schaltelement (224) in der zweiten Stellung den Energieversorgungsanschluss (45) des Elektromotors (230) mit dem Masseanschluss (270) des Elektromotors (230) über ein Widerstandsbauteil (300) elektrisch verbindet.

3. Anordnung (21) nach Anspruch 1 oder 2, wobei der Läufer (232) des Elektromotors (230) eine Feldwicklung aufweist, wobei der Energieversorgungsanschluss (45) des Elektromotors (230) und der Masseanschluss (270) des Elektromotors (230) mit der Feldwicklung des Elektromotors (230) verbunden sind.

4. Anordnung (21) nach einem der vorstehenden Ansprüche, wobei der Schalter einen Magnetaktor (220) aufweisend eine Spule (221, 222) und einen von dieser bewegbaren Anker (223) und eine von dem Anker (223) bewegbare Kontaktbrücke (224) als Schaltelement (224) aufweist,
wobei die Kontaktbrücke (224) durch die Bewegung des Ankers (223) zwischen der ersten Stellung und der zweiten Stellung umschaltbar ist.

5. Anordnung (21) nach Anspruch 4, wobei der Schalter einen ersten externen Kontakt (245) und einen zweiten externen Kontakt (50) aufweist, wobei in der ersten Stellung der erste externe Kontakt (245) mit dem zweiten externen Kontakt (50) elektrisch verbunden ist und wobei in der zweiten Stellung der erste externe Kontakt (245) mit einem Gehäuse (210) des Schalters elektrisch verbunden ist.

6. Anordnung (21) nach Anspruch 4 oder 5, wobei der Schalter einen ersten internen Kontakt (240) und einen zweiten internen Kontakt (250) aufweist, die von der Kontaktbrücke (224) elektrisch verbindbar sind, wobei der erste interne Kontakt (240) elektrisch mit dem ersten externen Kontakt (245) verbunden ist, und der zweite interne Kontakt (250) elektrisch mit dem zweiten externen Kontakt (50) verbunden ist.

7. Anordnung (21) nach einem der Ansprüche 4 bis 6, wobei der Schalter einen dritten internen Kontakt (241) und einen vierten internen Kontakt (260) aufweist, die von der Kontaktbrücke (224) elektrisch verbindbar sind, wobei der dritte interne Kontakt (241) mit dem ersten externen Kontakt (245) elektrisch verbunden ist, und wobei der vierte interne Kontakt (260) mit dem Gehäuse (210) des Schalters elektrisch verbunden ist.

8. Schalter, der ein Gehäuse (210) und darin einen Magnetaktor (220) aufweisend eine Spule (221, 222) und einen von dieser bewegbaren Anker (223) und eine von dem Anker (223) bewegbare Kontaktbrücke (224) aufweist,
wobei die Kontaktbrücke (224) durch die Bewegung des Ankers (223) zwischen einer ersten Stellung und einer zweiten Stellung umschaltbar ist,
wobei der Schalter einen ersten externen Kontakt (245), einen zweiten externen Kontakt (50), einen ersten internen Kontakt (240), einen zweiten internen Kontakt (250), einen dritten internen Kontakt (241), und einen vierten internen Kontakt (260) aufweist,
wobei der erste externe Kontakt (245) mit dem ersten internen Kontakt (240) und dem dritten internen Kontakt (241) elektrisch verbunden ist,
wobei der zweite externe Kontakt (50) mit dem zweiten internen Kontakt (250) elektrisch verbunden ist,
wobei der vierte interne Kontakt (260) mit dem Gehäuse (210) elektrisch verbunden ist, und
wobei die Kontaktbrücke (224) in der ersten Stellung den ersten internen Kontakt (240) und den zweiten internen Kontakt (250) und in der zweiten Stellung den dritten internen Kontakt (241) und den vierten internen Kontakt (260) elektrisch verbindet.

9. Brennkraftmaschine mit einer Anordnung (21) nach einem der Ansprüche 1 bis 7.
